# EUROPEAN PATENT SPECIFICATION

(11) **EP 0 654 767 B1**
(45) Date of publication and mention of the grant of the patent: **18.03.1998**
(21) Application number: 94118428.5
(22) Date of filing: 23.11.1994
(51) Int. Cl.: G07G 1/14, G07G 5/00

(54) **A POS terminal and a printing apparatus for the same**
Verkaufsstellendatenterminal und zugehöriges Druckgerät
Terminal de traitement de données et dispositif d'impression pour celui-ci

(30) Priority: 24.11.1993 JP 293556/93
(43) Date of publication of application: 24.05.1995
(73) Proprietor: SEIKO EPSON CORPORATION, Shinjuku-ku Tokyo 163-08 (JP)
(72) Inventor: Ebina, Kouichi, c/o Seiko Epson Corporation, Suwa-shi, Nagano-ken, 392 (JP); Ito, Ikuo, c/o Seiko Epson Corporation, Suwa-shi, Nagano-ken, 392 (JP); Kasai, Kazuaki, c/o Seiko Epson Corporation, Suwa-shi, Nagano-ken, 392 (JP)
(74) Representative: Hoffmann, Eckart, Dipl.-Ing.

(56) References cited:
- EP-A- 0 400 653
- GB-A- 2 065 350

## Description

The invention relates to POS terminals, and more particularly to POS terminals in which a personal computer is employed as the control device for the printer and other equipment.

A POS terminal consists of a control device that generates the data to be displayed or printed based on data input by sales personnel, such as the name and price of products purchased, a display module that displays said data after receiving it, and a printer that prints out said data. The conventional approach is to dedicate a unit as a POS terminal, integrating all of these devices. However, because the devices are integrated as one unit, this type of POS terminal lacks versatility and expandability. Furthermore, because it is developed exclusively for specific POS applications, its production volume tends to be small. Consequently, these POS terminals tend to be high in cost, and become obstacles against computerization in the POS field. To solve these problems, more efforts are being made toward the development of PC-POS systems, that use a general-purpose personal computer (hereafter referred to as "PC") as the control device, to which a display module and a printer are connected via general-purpose interfaces. In a PC-POS system, the same hardware can be used for many types of applications through the use of dedicated software for each POS application. Furthermore, by using a commercially available printed circuit board set, the PC that makes up the control device can be configured inexpensively, and its functions can be easily expanded and changed. Therefore, PC-POS systems are quite effective for computerizing the POS field.

However, conventional PC-POS systems require the type of connection shown in the block diagram in Figure 13, because of the requirement that the general-purpose interface provided in the PC be used. In the figure, 60 is a display module, 61 is a printer, and 62 is the control unit which sends data to display module 60 and printer 61. Display module 60 is equipped with a pass-through function. (This function does not forward a command or data sent by a device upstream to a device downstream, if the command or the data is intended only for the display module itself. The function will send the command or the data to a device downstream, if the command or the data is not intended for the display module itself, or if it is intended for both the display module and the device downstream.) As shown in the figure, in this POS terminal, the data from control unit 62 is input into display module 60, and the data output by display module 60 is then input into printer 61. The decision as to whether the data from control unit 62 should be displayed on display module 60 or printed by printer 61 is made by sending device selection data, along with data such as the total price, from control unit 62. This device selection data is recognized by either display module 60 or printer 61, and the data is displayed or printed. In this way, control unit 62 can control both a display module and a printer using a general-purpose interface.

Because a POS terminal is usually installed inside a store, particularly on the counter where accounting transactions take place, the counter space occupied by the POS terminal should be as small as possible. Therefore, the inventor has developed a PC-POS system based on a new concept, which reduces the area occupied by the POS terminal through a design in which the control unit is housed inside a body frame possessing the same "footprint" (size and shape of the base area) as the printer, allowing the placement of this body frame below the printer.

In such a PC-POS system, because display module 60 relays the interface signals from a host computer, i.e., the control unit, to printer 61, the interface cable connecting the host computer to the printer first connects the host computer to display module 60, and then connects display module 60 to printer 61. Consequently, this connection cable becomes an obstacle when it is necessary to stack control unit 62 and printer 61, or place them together. Furthermore, when the control unit and the printer are placed together, and when a common reference voltage is used, loop connection of said connection cable results in a coil formation, which renders the cable prone to external noise and may lead to errors in printing operation.

EP-A-0 400 653 and GB-A-2 065 350 each discloses a POS printer connected to one external device.

The objective of the invention is to solve the above-mentioned problems, and, by preventing loop connection of the connection cable, to provide a highly reliable PC-POS system in which the control unit and the printer are integrated as one unit.

This object is achieved with a POS terminal and a printing apparatus as claimed in claims 1 and 6, respectively.

Preferred embodiments of the invention are subject-matter of the dependent claims.

Since according to the present invention the second body frame housing the control unit is detachably installed at or in the first body frame housing the printing apparatus, both body frames are integrated into a single unit and yet may be separated if desired. Furthermore, both the printing apparatus and the control unit can be individually replaced, making it easy to upgrade the printing apparatus or the control unit, and to combine a printing apparatus and a control unit that best suit individual applications. In addition, because the control unit is equipped with a processing means which is driven by a general-purpose OS, general-purpose applications can be installed, and application software can be easily developed.

In the present invention, the printing apparatus has first and second connector means. The first connector means is specifically for connection to the control unit when the printing apparatus and the control unit are unified into an integral POS terminal. In one embodiment of the invention, the second connector means is preferably used for connecting a display module. The printing apparatus outputs the data input via at least the first connector means to the data processing means and the second connector means, the data processing means performing the desired arithmetic operation based on the data. The data can be displayed if a display module is connected to the second connector means. Furthermore, because the data can be displayed if, for example, a display module is connected to the second connector means, the data that is not processed by the data processing means can be directly output to the second connector means, thus enabling high-speed processing.

In another embodiment the second connector means allows the printing apparatus to be used with a different control device while preferably a third connector means of the printing apparatus is provided for connecting a display module, thus simplifying the connector means and the configuration of the display module. The data processing means of the printing apparatus blocks data input from the second connector means when it detects that a control unit is connected to the first connector means, thus giving higher priority to data received from the first connector means than those from the second connector means thereby preventing malfunction. Data from the first connector means, i.e., data from the control unit, can be displayed if a display module is connected to the third connecting means.

Because of the short distance between the printing apparatus and the control unit data are preferably exchanged on a logical level, such as a TTL level, between the two, not requiring conversion to a typical serial interface signal level. Therefore, the design of both the body frame and the connector means allows the overall apparatus to become compact.

The present invention will be explained in more detail below with reference to the drawings which illustrate specific embodiments only and in which:
- Fig. 1: is a block diagram showing the configuration of the POS terminal related to an embodiment of the invention;
- Fig. 2: is a front view diagram showing the exterior of the POS terminal according to an embodiment of the invention;
- Fig. 3: is a side view diagram showing the exterior of the POS terminal of Fig. 2;
- Fig. 4: is a diagram showing the positions of the components inside the PC unit;
- Fig. 5: is a diagram showing the flow of data in printer 10;
- Fig. 6: is a schematic diagram of one embodiment of printer 10;
- Fig. 7: is a schematic diagram of another embodiment of printer 10;
- Fig. 8: is a diagram showing the configuration of the data input/output relationship of printer 10 according to a first embodiment;
- Fig. 9: is a diagram showing another configuration of the data input/output relationship of printer 10 according to a second embodiment;
- Fig. 10: is a perspective view diagram showing the top of PC unit 11 suitable for the second embodiment of Fig. 9;
- Fig. 11: is a perspective view diagram showing the bottom of printer 10 according to the second embodiment of Fig. 9;
- Fig. 12: is a perspective view diagram showing the state in which printer 10 and PC unit, both according to the second embodiment, have been separated; and
- Fig. 13: is a block diagram showing the configuration of a conventional POS terminal.

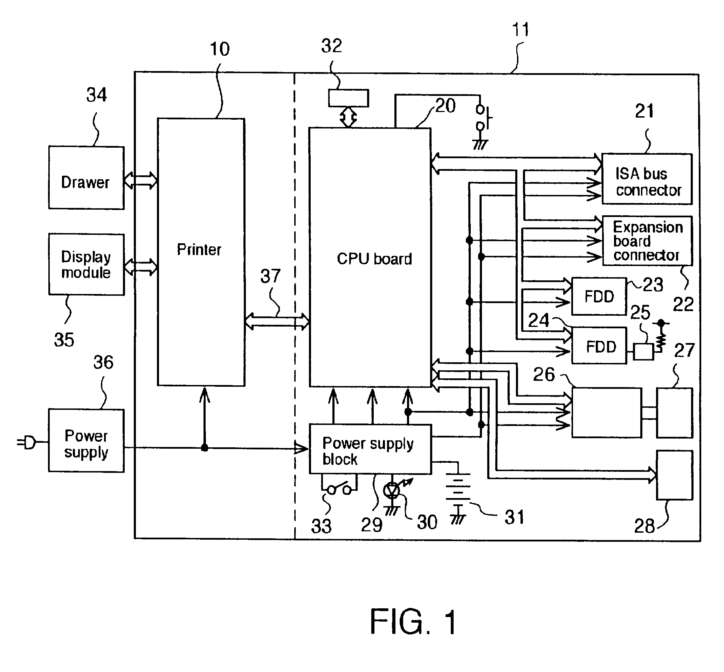

Referring first to Figs. 1 to 3, 10 is a printer comprising various components required for printing. 11 is a control unit (hereafter referred to as "PC unit") comprising a general-purpose PC board, a general-purpose OS, etc. 20 is a CPU board (data processing means) of PC unit 11, and is an all-in-one type that contains a CPU, memory, interfaces, etc. 21 is a standard bus (hereafter referred to as "ISA bus") connector. 22 is an expansion board connector. A board such as a communication board for communicating with the outside is connected to ISA bus connector 21, or items such as a memory card are connected to expansion board connector 22.

23 is a flexible disk drive (hereafter referred to as "FDD"), through which data is output to the outside, or by means of which a control program, etc. is entered. 24 is a hard disk drive (hereafter referred to as "HDD"), in which data such as a control program is stored. 25 is an access light for HDD 24. 26 is an RS232C level converter. 27 is a serial input/output connector. 28 is a CRT output connector. 29 is the power supply block of PC unit 11. 30 is a power supply light. 31 is a back-up power supply. 32 is a keyboard connector to which a keyboard (not shown) is connected. 33 is a power switch. 34 is a cash drawer. 35 is a display module. 36 is a power supply which supplies power to printer 10 and PC unit 11. As indicated by the bus type direct connection 37 between CPU board 20 and printer 10, printer 10 and PC unit 11 exchange signals on a TTL level, instead of the normal levels of a general-purpose interface, such as RS232C, of the PC unit. Thus while the kinds of signal exchanged via the connection 37 are preferably the same as those of a general purpose interface, the signal levels are different, i.e., correspond to those on the CPU board side of level converter 26.

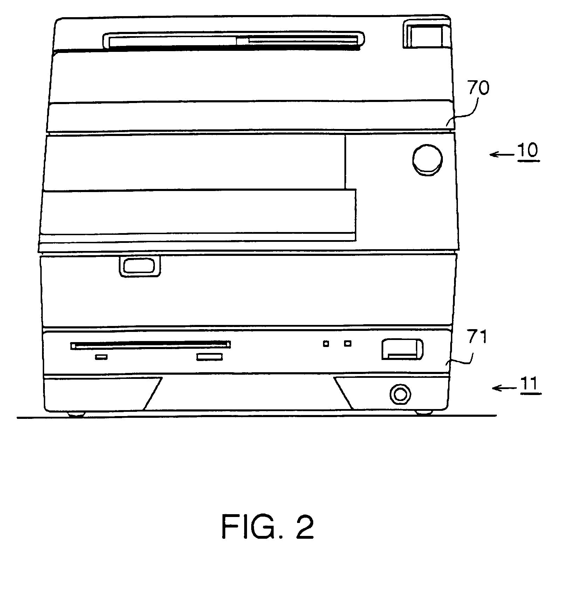

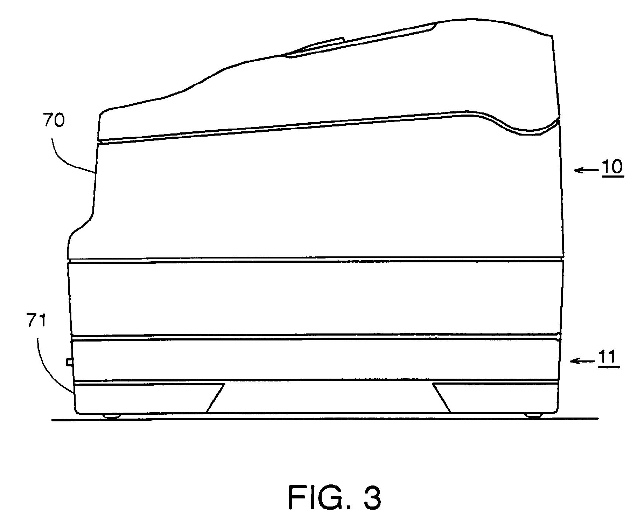

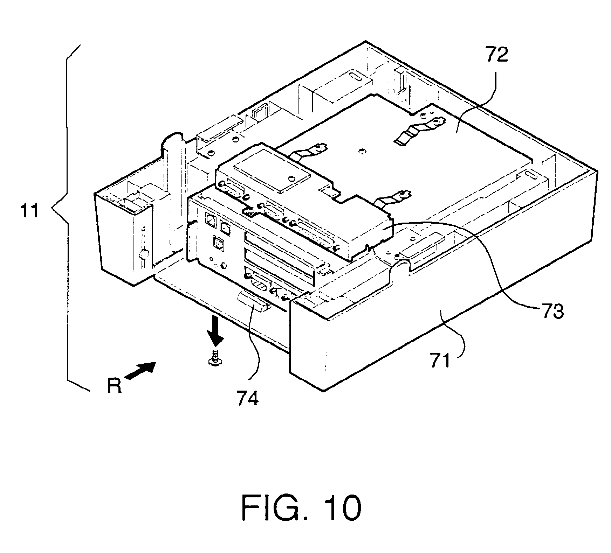

As shown in Figures 2 and 3, printer 10 and PC unit 11 are housed inside their own body frames 70 and 71, respectively, and become integrated when these body frames are connected. Note that PC unit 11 is detachable. Although, in this embodiment, PC unit 11 can be detached from printer 10 through a drawer-type arrangement, i.e. body frame 71 is accommodated in body frame 70, it is possible to use a configuration in which printer 10 is placed on top of PC unit 11 in a detachable manner as will be shown later with reference to Figs. 10 to 12.

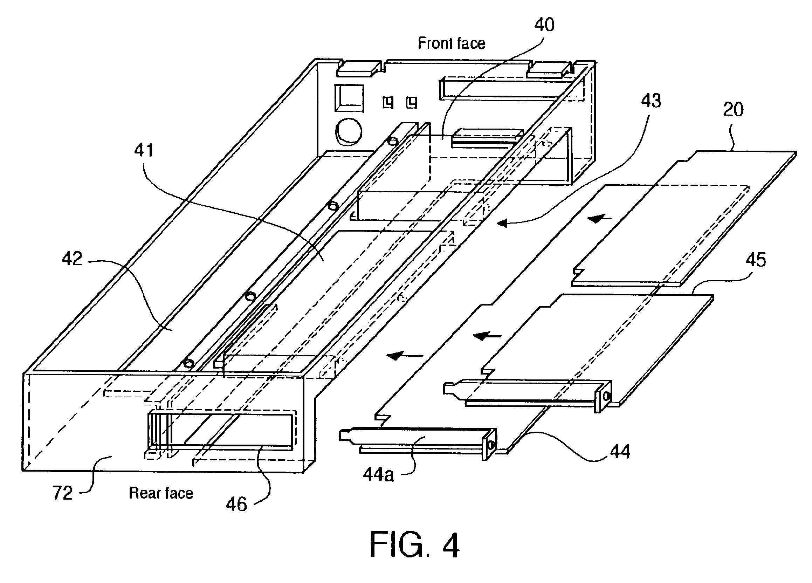

Figure 4 schematically explains the positions of the components of PC unit 11 inside a metallic shield case 72. In this figure, 40 is the location at which FDD 23 is to be positioned. 41 is the location at which HDD 24 is to be positioned. 42 is the location at which the power supply, etc. are to be positioned. 43 is the location at which CPU board 20, expansion I/O board 44 to be connected to ISA bus connector 21, and expansion I/O board 45 to be connected to expansion board connector 22 are to be positioned. Arrows in Figure 4 indicate the directions in which the respective boards are inserted. In other words, ISA bus connector 21 (not shown in the figure) is installed on the side wall on which expansion I/O board 44 is to be installed inside shield case 72 as shown in Figure 4. When expansion I/O board 44 is installed face up, its rear side 44a is exposed through the opening 46 in the rear face that is perpendicular to the side wall on which expansion I/O board 44 is to be installed.

CPU board 20 and expansion board connector 22 can be installed in directions other than those shown in Figure 4. Note, however, that the expansion I/O board 44 to be connected to ISA bus connector 21 is preferably positioned as shown in Figure 4, so as to expose the rear side through opening 46, and to allow easy operation of dip switches, access to a connector that may be located here, etc. which are typically provided at the rear side of a board.

The operation of this embodiment is explained below.

The data processed by PC unit 11 is sent as a TTL level signal to printer 10 where it is printed. The data from PC unit 11 also passes through printer 10 and is sent to display module 35, where it is displayed. In this case, the device selection data sent along with the data from PC unit 11 determines whether the data is to be printed by printer 10 or to be displayed by display module 35.

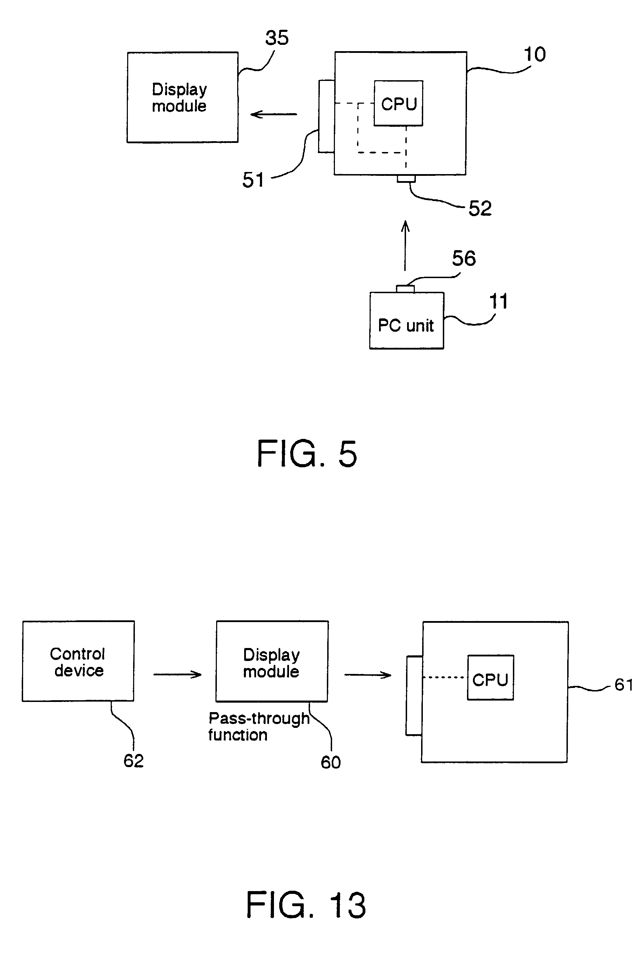

Figure 5 shows the flow of the data according to one embodiment of the invention. In the figure, 50 is a CPU which controls printer 10, 51 is a general-purpose interface connector of printer 10, which is used to connect display module 35 via printer 10 to PC unit 11, and 52 and 56 are the connectors for connecting PC unit 11 to printer 10, 52 being the connector on the printer side and 56 that on the PC unit side. As mentioned before signals transmitted through connectors 52 and 56 are TTL level signals while those at connector 51 are typical interface level signals. If PC unit 11 is connected to printer 10 in this way, data from PC unit 11 will be input to printer 10, and the data will be sent to CPU 50 inside printer 10 and to display module 35 connected to connector 51. The data will then be either displayed on display module 35 or printed by printer 10.

If PC unit 11 is not connected to printer 10, another control device may connected to connector 51. In such case data from connector 51 will be printed, and the conventional connection as shown in Figure 13 can be used for operation.

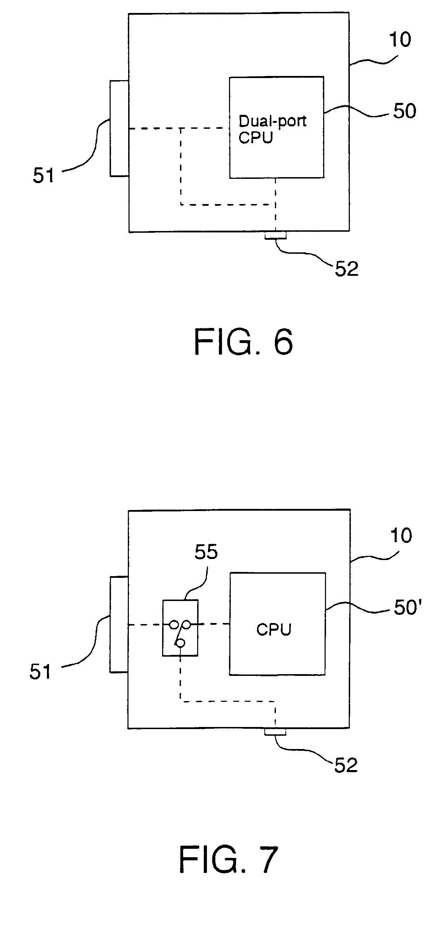

Figures 6 and 7 are schematic diagrams showing alternative configurations of printer 10 in Figure 5. The configuration of Fig. 6 uses a dual-port CPU 50 which possesses two I/O ports. The configuration of Fig. 7 uses a CPU 50' which possesses a single I/O port in combination with a data-selection switch 55 by which either connector 51 or connector 52 is connected to CPU 50'. Suitable data-selection switches are known to those skilled in the art and are commonly available. Therefore, the data-selection switch will not be explained in detail here.

Printer 10 shown in Figure 6 uses the dual-port CPU 50 which possesses two I/O ports for data exchange. When PC unit 11 is connected, printer 10 verifies that PC unit 11 is connected (by means explained later), and outputs data such as a busy signal through connector 51 to prevent data from being input through connector 51 into CPU 50. In the configuration of Fig. 7, when PC unit 11 is connected, printer 10 uses switch 55 to prevent data from being input through connector 51 into CPU 50'.

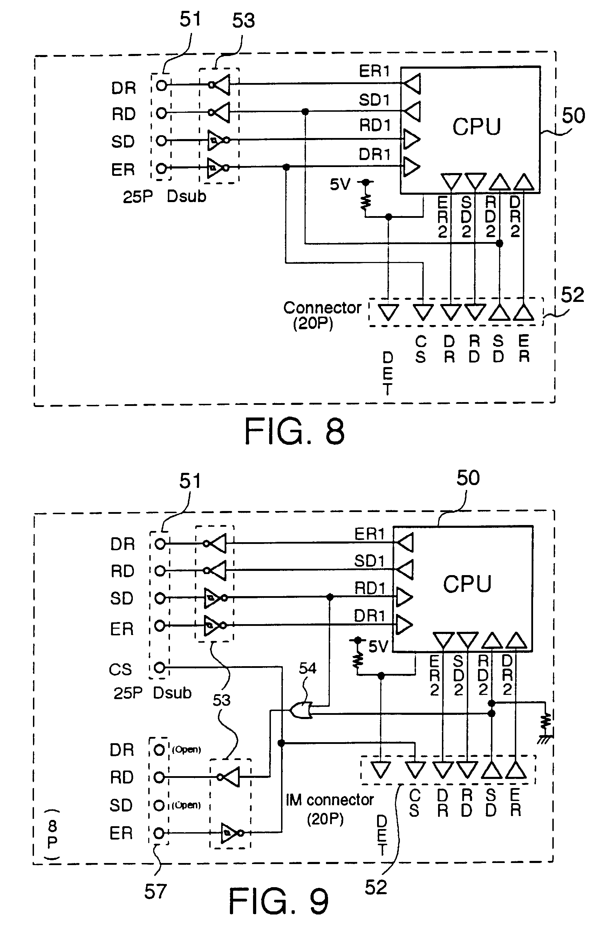

Two different embodiments of the invention will be explained in the following. In the first embodiment shown in Fig. 8, the display module 35 is connected to the general-purpose interface connector 51 of printer 10. In the second embodiment as shown in Fig. 9, a third connector 57 for connecting the display module is provided in the printer. In the second embodiment the general-purpose interface connector 51 of printer 10 is preferably covered and cannot be accessed while the frame bodies of PC unit 11 and printer 10 are connected.

Figure 8 shows the configuration of the data input/output relationship of printer 10 shown in Figure 6. Figure 9 shows another configuration of the data input/output relationship of printer 10 shown in Figure 6, which is used for the second embodiment. In both embodiments the display module 35 requires only one connector for data input/output, resulting in a simpler structure and less costs than conventional display module 60.

As explained above, the interface used in the embodiments of the invention for connector 51 is a general purpose interface such as RS232C, a type of serial interface. Signal names and their functions are described below (the same name will be used for a signal and the connector pin to which the signal is applied).
- DR (Data Set Ready):: Control signal indicating that the sending side is ready
- RD (Receive Data):: Receive serial data
- SD (Send Data):: Send serial data
- ER (Equipment Ready):: Control signal indicating that the receiving side is ready
- CS (Clear To Send):: Control signal from the receiving side to the sending side authorizing data transmission

The interface for connector 52 is a modified version of a general purpose interface (like RS232C). The modification allows PC unit 11 to simultaneously communicate with two devices (printer and display module). Thus, in the embodiments shown in Figs. 8 and 9, PC unit detects a busy state of the printer by means of the DR signal and that of the display unit by means of the CS signal.

In Figs. 8 and 9 reference numeral 53 denotes an RS232C level converter of the printer 10.

In printer 10 shown in Figure 8, a DET pin is provided in connector 52 as a means of verifying connection. Thus, when a PC unit is connected to connector 52, the DET pin of connector 52 becomes grounded, by which CPU 50 detects that PC unit 11 is connected to connector 52. When PC unit 11 is connected, ER1 is set to inactive, thus preventing data from being output by another control device if such other control device is connected to connector 51.

Send serial data SD of PC unit 11 is also connected to the Receive serial data RD pin of connector 51. Thus, when a display module is connected to connector 51, data such as display data can be sent from PC unit 11 to the display module. In this case, PC unit 11 can use the CS signal to determine whether or not the display module is ready to receive the data.

As shown in Figure 9, in the second embodiment printer 10 is equipped with the additional connector 57 dedicated for display module 35. In this case, data can be displayed on display module 35 connected to connector 57, either when PC unit 11 is connected to connector 52, or when data is input through connector 51 in a conventional manner.

First, an explanation will be offered for a case in which a control device is connected to connector 51 to input data. When sending data to printer 10, the control device sends data to be printed through SD after confirming that DR is active, indicating that the printer is ready to receive data. When sending data to a display module connected to connector 57, the control device sends data through SD after confirming that CS is active. The transmitted data goes through an OR gate 54 and reaches RD of the display module which processes the data.

Data transmission is executed in the same way when PC unit 11 is connected to connector 52. Note that simultaneous transmission of data from connector 51 and connector 52 is not allowed in this configuration. Otherwise, the transmitted data would be mixed in OR gate 54, leading to the possibility of incorrect data being input into the display module connected to connector 57.

SD of connector 52 is pulled down by a resistor, in order to prevent the output of OR gate 54 from being fixed at a high level when PC unit 11 is not connected.

As explained above, in both embodiments, printer 10 and PC unit 11 are connected using TTL-level signals, connector 52 used for connecting PC unit 11 to printer 10 and connector 51 used for connecting an external device are installed, and PC unit 11 can be connected to or detached from printer 10. Thus, when PC unit 11 is connected to connector 52, data input from connector 51 to the CPU 50 (50') of the printer is disabled. Furthermore, the configuration allows the printing of data that comes in through connector 51 when PC unit 11 is not connected to connector 52, thus making it possible to easily replace just printer 10 or PC unit 11. Additionally, the POS terminal can be made compact by stacking printer 10 on top of PC unit 11.

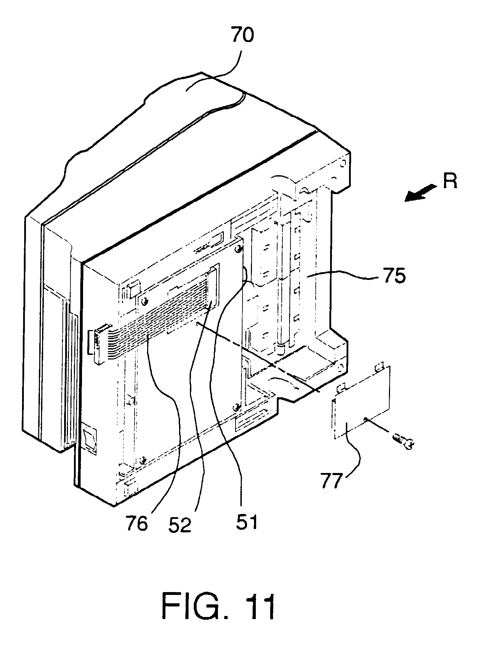

Figure 10 is a perspective view of PC unit 11 according to the second one of the above mentioned two embodiments. In this figure, arrow R indicates the rear side of PC unit 11. PC unit 11 consists of plastic case 71 and metallic shield case 72 which houses functional components and corresponds to shield case 72 only schematically shown in Fig.4. Shield case 72 can be pulled out from case 71 in the rearward direction, i.e., the direction opposite arrow R, by pressing down retention hook 74. In the embodiment shown, a connector box 73 protrudes from shield case 72, thus expanding the connector space on the back of the shield case. This connector box 73 fits into printer connector room 75 shown in Figure 11, when printer 10 is placed on top of PC unit 11. In this way, connector 51 used for connecting printer 10 with an external control device is shielded, thus preventing printer 10 from being connected to an external control device when it is connected to PC unit 11. It is to be noted that if the connector box 73 is not required for the PC unit other means like a simple plate may be used for covering connector 51 and preventing access to it when the printer is mounted on the PC unit.

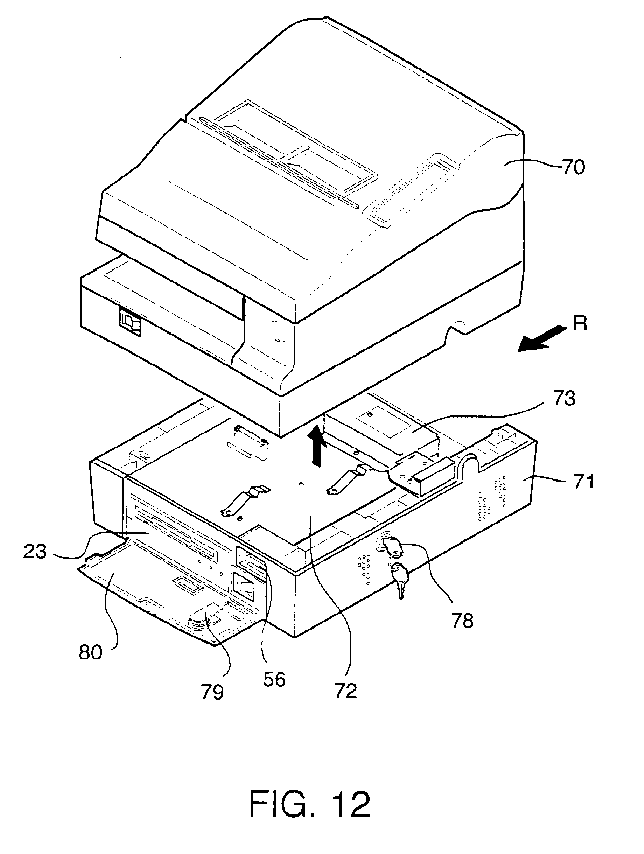

Figure 11 is a perspective view of printer 10 from the bottom side. Arrow R indicates the side that becomes the rear face when printer 10 is connected to PC unit 11. Connector 52 for connecting to PC unit 11 is installed on the bottom surface of printer 10, and is connected to connector 56 on the PC unit 11 side, shown in Figure 12, via flat cable 76 (it will be understood that 52, 56 and 76 establish a connection as represented by 37 in Fig. 1). Note that the hole through which flat cable 76 is led out from connector 52 is covered by shield cover 77 to prevent electromagnetic noise emitted by printer 10 from affecting PC unit 11.

Figure 12 is a perspective view in which printer 10 is shown detached from PC unit 11. To detach printer 10 in this way, a lock of the connection device must be unlocked using master key 78. The same master key 78 can be used to release lid lock 79 which prevents the opening of front lid 80. When front lid 80 is released, it becomes possible to insert a floppy disk into or remove it from floppy disk drive 23. Furthermore, in this state, shield case 72 can be pulled out from case 71 in the rearward direction, i.e., direction opposite arrow R, by pressing down retention hook 74. Therefore, it is possible using only master key 78, to manage all important replacement operations related to a PC-POS terminal, e.g., printer replacement, PC unit replacement, and replacement of software to be executed by the PC unit. This improves both the maintainability and safety of the equipment.

## Claims

1. A POS terminal including at least a printing apparatus (10) and a control unit (11) for sending data containing print data and/or control commands to said printing apparatus, wherein:
said printing apparatus comprises a first body frame (70) housing,
first connector means (52) for electrical connection to said control unit (11) to allow exchange of data between the control unit (11) and the printing apparatus (10),
second connector means (51) for electrical connection to an external device (35) other than said control unit (11), and
first data processing means (50; 50') for processing first data input via said first connector means (52) and second data input via said second connector means (51); and
said control unit (11) comprises a second body frame (71, 72) housing,
second data processing means (20) controlled by a general-purpose operating system, and
third connector means (56);
said first body frame (70) and said second body frame (71, 72) being detachably mounted to each other so as to form one unit, and the third connector means (56) being detachably connected to said first connector means (52).

2. A POS terminal according to Claim 1, wherein said printing apparatus (10) further comprises;
a connection verifying means (DET) for detecting the connection between said first and third connector means (52, 56);
said first data processing means (50; 50') selectively processing said first data, when connected, and said second data, when disconnected, corresponding to an output of said connection verifying means.

3. A POS terminal according to Claim 2, wherein said printing apparatus (10) further comprises;
data transfer means for transferring data input via said first connector means (52) to said second connector means (51).

4. A POS terminal according to Claim 1 or 2, wherein said second body frame (71, 72) has a protruding section (73) at a position to cover said second connector means (51) of the printing apparatus so as to prevent the latter from being connected to an external device.

5. A POS terminal according to Claim 4, wherein said printing apparatus (10) further comprises
fourth connector means (57) for connecting a display means (35), and
data transfer means (54) for transferring data input via said first connector means (52) to said fourth connecting means (57).

6. A printing apparatus for a POS terminal comprising:
first connector means (52) adapted to be connected to an external control device (11) for exchanging first data including print data and/or control commands with said external control device,
second connector means (51) adapted to be connected to a device (35) other than said external control device (11) for exchanging second data similar to said first data with the other device,
connection verifying means (DET) for detecting the connection between said first connector means and said external control device, and
data processing means (50; 50') for selectively processing said first data, when connection is detected, and said second data, when disconnection is detected, corresponding to an output of said connection verifying means.

## Patentansprüche

1. POS-Terminal mit zumindest einem Druckgerät (10) und einer Steuereinheit (11) zum Schicken von Druckdaten und/oder Steuerbefehlen enthaltenden Daten an das Druckgerät, wobei:
das Druckgerät ein erstes Vorrichtungsgestell (70) umfaßt, in dem untergebracht sind:
eine erste Steckverbinderanordnung (52) für den elektrischen Anschluß an die Steuereinheit (11), um den Austausch von Daten zwischen der Steuereinheit (11) und dem Druckgerät (10) zu ermöglichen,
eine zweite Steckverbinderanordnung (51) für den elektrischen Anschluß an eine andere externe Vorrichtung (35) als die Steuereinheit (11), und
eine erste Datenverarbeitungseinrichtung (50; 50') zum Verarbeiten über die erste Steckverbinderanordnung (52) eingegebener erster Daten und über die zweite Steckverbinderanordnung (51) eingegebener zweiter Daten; und
die Steuereinheit (11) ein zweites Vorrichtungsgestell (71, 72) umfaßt, in dem untergebracht sind:
eine zweite Datenverarbeitungseinrichtung (20), die von einem Universal-Betriebssystem gesteuert ist, und
eine dritte Steckverbinderanordnung (56);
wobei das erste Vorrichtungsgestell (70) und das zweite Vorrichtungsgestell (71, 72) lösbar aneinander befestigt sind, um eine Einheit zu bilden, und die dritte Steckverbinderanordnung (56) lösbar mit der ersten Steckverbinderanordnung (52) verbunden ist.

2. POS-Terminal nach Anspruch 1, bei dem das Druckgerät (10) des weiteren eine Verbindungsverifiziereinrichtung (DET) zum Erfassen der Verbindung zwischen der ersten und der dritten Steckverbinderanordnung (52, 56) aufweist;
wobei die erste Datenverarbeitungseinrichtung (50; 50') entsprechend einem Ausgangssignal der Verbindungsverifiziereinrichtung selektiv die ersten Daten verarbeitet, wenn eine Verbindung besteht, und die zweiten Daten, wenn keine Verbindung besteht.

3. POS-Terminal nach Anspruch 2, bei dem das Druckgerät (10) des weiteren eine Datenübertragungseinrichtung zum Übertragen von über die erste Steckverbinderanordnung (52) eingegebenen Daten an die zweite Steckverbinderanordnung (51) aufweist.

4. POS-Terminal nach Anspruch 1 oder 2, bei dem das zweite Vorrichtungsgestell (71, 72) einen hervorstehenden Abschnitt (73) an einer Position zum Bedecken der zweiten Steckverbinderanordnung (51) des Druckgeräts aufweist, um zu verhindern, daß letzteres an eine externe Vorrichtung anschließbar ist.

5. POS-Terminal nach Anspruch 4, bei dem das Druckgerät (10) des weiteren aufweist:
eine vierte Steckverbinderanordnung (57) zum Anschluß einer Anzeigeeinrichtung (35) und
eine Datenübertragungseinrichtung (54) zum Übertragen von über die erste Steckverbinderanordnung (52) eingegebenen Daten an die vierte Steckverbinderanordnung (57).

6. Druckgerät für ein POS-Terminal, umfassend:
eine erste Steckverbinderanordnung (52), die an eine externe Steuervorrichtung (11) zum Austausch erster Daten einschließlich Druckdaten und/oder Steuerbefehlen mit der externen Steuervorrichtung anschließbar ist,
eine zweite Steckverbinderanordnung (51), die an eine andere Vorrichtung (35) als die externe Steuervorrichtung (11) zum Austausch zweiter Daten, die den ersten Daten ähnlich sind, mit der anderen Vorrichtung anschließbar ist,
eine Verbindungsverifiziereinrichtung (DET) zum Erfassen der Verbindung zwischen der ersten Steckverbinderanordnung und der externen Steuervorrichtung und
eine Datenverarbeitungseinrichtung (50; 50') zum selektiven Verarbeiten der ersten Daten, wenn eine Verbindung erfaßt ist, und der zweiten Daten, wenn erfaßt ist, daß keine Verbindung besteht, entsprechend einem Ausgangssignal der Verbindungsverifiziereinrichtung.

## Revendications

1. Terminal POS comportant au moins un dispositif (10) d'impression et une unité (11) de commande destiné à envoyer des données contenant des données d'impression et/ou des instructions de commande au dispositif d'impression, dans lequel :
le dispositif d'impression comporte un premier châssis (70) de corps dans lequel sont logés,
des premiers moyens (52) formant connecteur destinés à la connexion électrique à l'unité (11) de commande pour permettre l'échange de données entre l'unité (11) de commande et le dispositif (10) d'impression,
des seconds moyens (51) formant connecteur destinés à la connexion électrique à un dispositif (35) extérieur autre que l'unité (11) de commande, et des premiers moyens (50 ; 50') de traitement de données destinés à traiter des premières données qui ont été entrées par l'intermédiaire des premiers moyens (52) formant connecteur et des secondes données qui ont été entrées par l'intermédiaire des seconds moyens (51) formant connecteur ; et
l'unité (11) de commande comporte un second châssis (71, 72) de corps dans lequel sont logés,
des seconds moyens (20) de traitement de données commandés par un système d'exploitation d'utilisation générale, et
des troisièmes moyens (56) formant connecteur ;
le premier châssis (70) de corps et le second châssis (71, 72) de corps étant montés de manière à pouvoir être détachés l'un de l'autre de manière à former une unité, et les troisièmes moyens (56) formant connecteur étant reliés de manière à pouvoir être détachés aux premiers moyens (52) formant connecteur.

2. Terminal POS suivant la revendication 1, dans lequel le dispositif (10) d'impression comporte en outre :
des moyens (DET) de vérification de connexion destinés à détecter la connexion entre les premiers et les troisièmes moyens (52. 56) formant connecteur;
les premiers moyens (50, 50') de traitement de données traitant de manière sélective les premières données, lorsqu'ils sont connectés, et les secondes données lorsqu'ils sont déconnectés, en fonction d'une sortie des moyens de vérification de connexion.

3. Terminal POS suivant la revendication 2, dans lequel le dispositif (10) d'impression comporte en outre :
des moyens de transfert de données destinés à transférer des données entrées par l'intermédiaire des premiers moyens (52) formant connecteur aux second moyens (51) formant connecteur.

4. Terminal POS suivant la revendication 1 ou 2, dans lequel le second châssis (71, 72) de corps a une section (73) faisant saillie en une position pour recouvrir les seconds moyens (51) formant connecteur du dispositif d'impression de manière à empêcher que ce dernier soit connecté à un dispositif extérieur.

5. Terminal POS suivant la revendication 4, dans lequel le dispositif (10) d'impression comporte en outre
des quatrièmes moyens (57) formant connecteur destinés à connecter des moyens (35) d'affichage, et
des moyens (54) de transfert de données destinés à transférer des données qui ont été entrées par l'intermédiaire des premiers moyens (52) formant connecteur aux quatrièmes moyens (57) formant connecteur.

6. Dispositif d'impression pour un terminal POS comportant :
des premiers moyens (52) formant connecteur adaptés pour être connectés à un dispositif (11) de commande extérieur destiné à échanger des premières données comportant des données d'impression et/ou des instructions de commande avec le dispositif de commande extérieur,
des seconds moyens (51) formant connecteur adaptés pour être connectés à un dispositif (35) autre que le dispositif (11) de commande extérieur destiné à échanger des secondes données similaires aux premières données avec l'autre dispositif,
des moyens DET de vérification de connexion destinés à détecter la connexion entre les premiers moyens formant connecteur et le dispositif de commande extérieur, et
des moyens (50, 50') de traitement de données destinés à traiter de manière sélective les premières données, lorsque la connexion est détectée, et les secondes données lorsque la déconnexion est détectée. en fonction d'une sortie des moyens de vérification de connexion.
